# EUROPÄISCHE PATENTSCHRIFT

(11) **EP 3 365 393 B1**
(45) Veröffentlichungstag und Bekanntmachung des Hinweises auf die Patenterteilung: **04.12.2019**
(21) Anmeldenummer: 16790299.8
(22) Anmeldetag: 21.10.2016
(51) Int. Cl.: C09C 1/50, F28D 7/00, F28D 7/10, F28D 7/16, B01J 12/00, B01J 19/00, F28F 19/00

(54) **WÄRMETAUSCHER-ANORDNUNG FÜR EINE INDUSTRIERUSSHERSTELLUNGSANLAGE**
HEAT EXCHANGER ARRANGEMENT FOR AN INDUSTRIAL CARBON BLACK PRODUCTION PLANT
SYSTÈME D'ÉCHANGEUR DE CHALEUR POUR INSTALLATION DE PRODUCTION DE NOIR DE CARBONE INDUSTRIELL

(30) Priorität: 23.10.2015 DE 102015220742
(43) Veröffentlichungstag der Anmeldung: 29.08.2018
(73) Patentinhaber: ARVOS GmbH, 34123 Kassel (DE)
(72) Erfinder: JAGUSCH, Silke, 51371 Leverkusen (DE); LAUER, Jürgen, 47057 Duisburg (DE); HOMOKI, Gregory Gene, Allison Park, Pennsylvania 15101 (US); GEISLER, James Francis, Allison Park, Pennsylvania 15101 (US)
(74) Vertreter: dompatent von Kreisler Selting Werner - Partnerschaft von Patent- und Rechtsanwälten mbB
(86) Internationale Anmeldenummer: PCT/EP2016/075406
(87) Internationale Veröffentlichungsnummer: WO 2017/068139

(56) Entgegenhaltungen:
- EP-A1- 2 570 646
- WO-A2-2015/073614
- DE-A1-102009 042 507

## Beschreibung

Die vorliegende Erfindung betrifft eine Industrierußherstellungsanlage mit mindestens einem Reaktor zur Herstellung eines Rauchgases und mit einem Wärmetauschersystem.

Industrieruß, das auch carbon black genannt wird, zählt zurzeit zu den 50 weltweit am meisten produzierten Chemikalien. Üblicherweise wird Industrieruß in separaten Herstellungsanlagen hergestellt. Die Industrierußherstellungsanlagen weisen einen Reaktor auf, in dem Erdgas oder Öl unvollständig verbrannt wird und das entstehende Rauchgas anschließend zur Abscheidung des Industrierußes gefiltert wird. Die für die Verbrennung verwendete Reaktionsluft wird zumeist vor der Zuführung zu dem Reaktor vorgewärmt. Hierzu wird zumeist das Rauchgas vor der Filterung durch einen Wärmetauscher geleitet, mittels dem die Reaktionsluft vorgewärmt wird. Durch die Vorwärmung der Reaktionsluft kann der thermische Wirkungsgrad der Industrierußherstellungsanlage gesteigert werden.

Bei der Herstellung von Industrieruß wird das Rauchgas zumeist schlagartig durch Einspritzung von Wasser, dem sogenannten Quenching, abgekühlt. Dadurch soll sichergestellt werden, dass der Reaktionsablauf gestoppt ist und somit der in dem Rauchgas enthaltene Industrieruß die gewünschte Qualität besitzt. Die Druckschrift WO2015/073614 A2 offenbart den Einsatz von Wärmetauschern um das Rauchgas abzukühlen. Die Druckschrift DE10 2009 042507 A1 offenbart eine besondere Wärmetauscheranordnung. Die Druckschrift EP 2 570 646 A1 offenbart einen Doppelrohrwärmetauscher.

In den letzten Jahren hat sich herausgestellt, dass eine Abkühlung des Rauchgases zum Abschluss der Industrierußproduktion auch anderweitig, beispielweise über einen Wärmeaustausch, möglich ist, ohne dass es zu Qualitätseinbußen des Endproduktes kommt. Hiervon ausgehend ist es Aufgabe der vorliegenden Erfindung, eine Industrierußherstellungsanlage bereit zu stellen, die einen hohen thermischen Wirkungsgrad besitzt und darüber hinaus einfach im Aufbau ist.

Die erfindungsgemäße Industrierußherstellungsanlage ist definiert durch die Merkmale des Anspruchs 1.

Die erfindungsgemäße Industrierußherstellungsanlage weist einen Reaktor zur Herstellung eines Rauchgases und ein Wärmetauschersystem mit einem ersten Wärmetauscherabschnitt zum Wärmeaustausch zwischen dem Rauchgas und einem Fluid und einem zweiten Wärmetauscherabschnitt zum Wärmeaustausch zwischen dem Rauchgas und Reaktionsluft für den Reaktor auf. Die Reaktionsluft ist mittels des zweiten Wärmetauscherabschnitts vorwärmbar. Der erste Wärmetauscherabschnitt ist als Doppelrohrwärmetauscher mit jeweils einwegig in jeweils einem ersten Mantelrohr angeordneten ersten Rohren und der zweite Wärmetauscherabschnitt als Rohrbündelwärmetauscher mit in einem zweiten Mantelrohr angeordneten Rohrbündel aus zweiten Rohren, die jeweils einwegig in dem Mantelrohr angeordnet sind, ausgebildet. Die ersten und die zweiten Rohren sind von dem Rauchgas durchströmbar. Der Doppelrohrwärmetauscher und der Rohrbündelwärmetauscher sind vertikal angeordnet, wobei die jeweils oberen Enden der ersten und zweiten Rohre über eine Rohrleitung miteinander verbunden sind. Das Rauchgas durchströmt den Doppelrohrwärmetauscher aufsteigend und den Rohrbündelwärmetauscher abwärts.

Das Vorsehen eines derartigen Wärmetauschersystems in einer Industrierußherstellungsanlage hat sich als besonders vorteilhaft herausgestellt. Über den ersten Wärmetauscherabschnitt lässt sich ein Fluid erwärmen, so dass die Wärmeenergie des Rauchgases in vorteilhafter Weise genutzt werden kann. Beispielsweise kann der erste Wärmetauscherabschnitt als Verdampfer ausgebildet sein, in dem das Fluid in Form von Wasser verdampft wird. Der erste Wärmetauscherabschnitt kann gleichzeitig eine Abkühlfunktion für das Rauchgas besitzen, welche die Beendigung des Reaktionsablaufs bei der Industrierußherstellung unterstützt. Dadurch kann auf einige der Abkühlvorrichtungen des Reaktors, wie beispielsweise Einspritzdüsen zum sogenannten "Quenching", verzichtet werden. Durch die Nutzung der Abwärme des Rauchgases wird darüber hinaus der thermische Wirkungsgrad der Industrierußherstellungsanlage gesteigert. Durch die vertikale Anordnung des Rohrbündelwärmetauschers für die Reaktionsluftvorwärmung wird erreicht, dass eine Dehnung der Rohrbündel in dem Mantelrohr in vorteilhafter Weise erfolgen kann. Aufgrund des Wärmeübergangs von dem Rauchgas auf Luft erfolgt in dem Rohrbündelwärmetauscher ein Wärmeübergang auf ein relativ warmes, gasförmiges Medium, so dass die zweiten Rohre eine hohe Temperatur aufweisen, was zwangsläufig ein relativ weiches Material der zweiten Rohre mit sich bringt. Eine horizontale Anordnung des Rohrbündelwärmetauschers würde zwangsläufig zu Problemen aufgrund von Durchbiegungen der zweiten Rohre führen. Die vertikale Anordnung verhindert dieses, wobei gleichzeitig eine Wärmedehnung des zweiten Mantelrohrs und der zweiten Rohre in vertikaler Richtung problemlos erfolgen kann. Der ebenfalls vertikal angeordnete Doppelrohrwärmetauscher bringt vergleichbare Vorteile. Ferner wird durch das Vorsehen einer Rohrleitung, die die jeweils oberen Enden der ersten und zweiten Rohre miteinander verbindet, erreicht, dass die Verbindung zwischen dem ersten und dem zweiten Wärmetauscherabschnitt relativ kurz gehalten werden kann. Das Rauchgas besitzt nach dem Durchströmen des ersten Wärmetauscherabschnitts immer noch eine relativ hohe Temperatur, so dass für die Verbindung zwischen dem ersten und dem zweiten Wärmetauscherabschnitt hochwertige Rohrleitungen verwendet werden müssen. Eine kurze Rohrleitungsverbindung zwischen dem ersten und dem zweiten Wärmetauscherabschnitt, wie sie die vorliegende Erfindung ermöglicht, ist daher aus Kostengründen vorteilhaft. Darüber hinaus ermöglicht die erfindungsgemäße Anordnung von Doppelrohrwärmetauscher und Rohrbündelwärmetauscher, dass diese relativ dicht beieinander angeordnet werden können, so dass der Platzbedarf für das Wärmetauschersystem in der Industrierußherstellungsanlage relativ gering ist.

Vorzugsweise ist vorgesehen, dass der Doppelrohrwärmetauscher als Naturumlaufdampferzeuger ausgebildet ist. Als Fluid wird somit Wasser verwendet. Das Rauchgas erwärmt das Wasser im Doppelrohrwärmetauscher, wobei dieses verdampft. Durch die erfindungsgemäße Anordnung von ersten Rohren, die jeweils in ersten Mantelrohren angeordnet sind, wird erreicht, dass das Wasser in einer relativ dünnen Schicht um die ersten Rohren fließt, so dass das Wasser durch einen hohen Energieeintrag in vorteilhafter Weise verdampfen kann. Das Wasser wird im Gleichstrom geführt, so dass in vorteilhafter Weise ein Naturumlauf in dem Doppelrohrwärmetauscher entstehen kann. Dadurch werden aufwändige Anlagen zum Pumpen des Wassers, wie beispielsweise Umlaufpumpen, die einen größeren Energieaufwand bedeuten, vermieden.

Der Doppelrohrwärmetauscher kann eine Dampftrommel aufweisen, die herkömmlicherweise als Speicher, Verteiler und Separator von Wasser und Dampf dient. Mit anderen Worten: Die Dampftrommel wird gleichmäßig mit Speisewasser versorgt und der in dem Doppelrohrwärmetauscher erzeugte Dampf wird der Dampftrommel ebenfalls zugeleitet. Vorzugsweise ist die Dampftrommel oberhalb des Doppelrohrwärmetauschers angeordnet, so dass das in die ersten Mantelrohre aus der Trommel eingeleitete Wasser einem ausreichenden Druck unterliegt, um in den Mantelrohren bis zu dem Abschnitt, in dem eine Verdampfung stattfindet, aufzusteigen, wodurch der Naturumlauf in vorteilhafter Weise unterstützt wird.

Es kann vorgesehen sein, dass der Doppelrohrwärmetauscher eine vertikal stehende erste Eintrittskammer für das Rauchgas aufweist, an die die ersten Rohre angeschlossen sind und die ein die ersten Rohre aufnehmender erster unterer Rohrboden begrenzt. Mittels der vertikal stehenden ersten Eintrittskammer kann in vorteilhafter Weise eine Verteilung des Rauchgases in die einzelnen ersten Rohre erfolgen.

An den ersten unteren Rohrboden angrenzend kann mindestens eine Einlasskammer für das Fluid angeordnet sein, an die die ersten Mantelrohre angeschlossen sind. Die mindestens Einlasskammer ermöglicht eine vorteilhafte Verteilung des Fluids auf die ersten Mantelrohre.

Im oberen Ende der Mantelrohre kann der Doppelrohrwärmetauscher mindestens eine Auslasskammer aufweisen, in die die ersten Mantelrohre münden. Die mindestens eine Auslasskammer sammelt das in den Mantelrohren erhitzte bzw. verdampfte Fluid und leitet dieses beispielsweise zu der Dampftrommel. Ferner kann an die mindestens eine Auslasskammer angrenzend ein erster oberer Rohrboden vorgesehen sein, der die ersten Rohre aufnimmt. An den ersten oberen Rohrboden anschließend kann ein Sammelrohr für das Rauchgas angeordnet sein, dass in die Rohrleitung übergeht. Das Sammelrohr kann beispielsweise als Trichterrohr ausgebildet sein.

Es kann auch vorgesehen sein, dass sich die ersten Mantelrohre an ihrem unteren Ende jeweils zu einer Einlasskammer für das Fluid erweitern. Dabei ist vorzugsweise vorgesehen, dass diese miteinander verbunden sind und den ersten unteren Rohrboden bilden. Zusätzlich oder Alternativ kann auch vorgesehen sein, dass sich die ersten Mantelrohre an ihrem oberen Ende jeweils zu einer Auslasskammer für das Fluid erweitern, wobei diese vorzugsweise miteinander verbunden sind und den ersten oberen Rohrboden bilden.

Vorzugsweise ist vorgesehen, dass der Rohrbündelwärmetauscher als Gegenstromwärmetauscher ausgebildet ist. Mit anderen Worten: Während die zweiten Rohre in Abwärtsrichtung von Rauchgas durchströmt werden, wird das zweite Mantelrohr in aufsteigender Richtung von der Reaktionsluft durchströmt. Eine derartige Gegenstromanordnung hat sich für die Vorwärmung der Reaktionsluft als besonders vorteilhaft herausgestellt.

Vorzugsweise ist vorgesehen, dass der Rohrbündelwärmetauscher hängend angeordnet ist. Vorzugsweise ist dabei der Rohrbündelwärmetauscher über das zweite Mantelrohr aufgehängt. Eine derartige Anordnung ist besonders vorteilhaft, da Wärmedehnungen des Rohrbündelwärmetauscher, und insbesondere des zweiten Mantelrohrs, in Abwärtsrichtung erfolgen, so dass das obere Ende des Rohrbündelwärmetauschers im Wesentlichen an derselben Stelle verbleibt. Dadurch werden Probleme, die durch unterschiedliche Dehnungen des ersten Wärmetauscherabschnitts und des zweiten Wärmetauscherabschnitts entstehen können, vermieden.

Für die hängende Anordnung des Rohrbündelwärmetauschers kann eine Halterung vorgesehen sein, die an dem zweiten Mantelrohr angreift. Die Halterung kann als Federhalterung ausgebildet sein, wobei das Gewicht der des Rohrbündelwärmetauschers zumindest teilweise von einer Federeinrichtung der Federhalterung aufgenommen wird.

Wärmedehnung, die in dem ersten Wärmetauscherabschnitt entsteht, kann durch die Ausgestaltung der Halterung als Federhalterung ausgeglichen werden, in dem der gesamte zweite Wärmetauscherabschnitt bei der Dehnung mitgeführt wird. Dies ist möglich, da eine Vertikalbewegung in einem vorgegeben Maße in der Federhalterung zugelassen ist.

Zusätzlich oder alternativ kann auch die den ersten und zweiten Wärmetauscherabschnitt verbindenden Rohrleitung lediglich die Wärmedehnung, die in dem ersten Wärmetauscherabschnitt entsteht, ausgleichen, beispielsweise durch einen entsprechenden Kompensator.

Vorzugsweise ist vorgesehen, dass der Rohrbündelwärmetauscher eine vertikal angeordnete zweite Eintrittskammer für das Rauchgas aufweist, die in einem oberen Endabschnitt des Rohrbündelwärmetauschers angeordnet ist, an die die zweiten Rohre angeschlossen sind und die ein die zweiten Rohre aufnehmender zweiter oberer Rohrboden begrenzt. Mittels der zweiten Eintrittskammer lässt sich das Rauchgas in vorteilhafter Weise in die zweiten Rohre des Rohrbündelwärmetauschers verteilen.

Vorzugsweise ist vorgesehen, dass die zweiten Rohre am zweiten oberen Rohrboden hängend befestigt sind. Dadurch wird erreicht, dass Wärmedehnungen der zweiten Rohre ebenfalls in abwärts gerichteter Richtung erfolgen. Jedes zweite Rohr kann beispielsweise eine Hängevorrichtung aufweisen, über die jedes zweite Rohr an dem zweiten oberen Rohrboden befestigt ist.

Dabei ist insbesondere vorgesehen, dass ein zweiter unterer Rohrboden die unteren Enden der zweiten Rohre aufnimmt, wobei die zweiten Rohre jeweils Einzelrohrkompensatoren zur Verbindung mit dem zweiten unteren Rohrboden aufweisen. Dadurch wird in vorteilhafter Weise erreicht, dass Wärmedehnungen ohne eine ungewollte Verformung der zweiten Rohre kompensiert werden können.

Der zweite obere Rohrboden kann gekühlt sein. Beispielsweise kann der zweite obere Rohrboden als Doppelboden ausgebildet sein, in dem innenliegend eine Kühlkammer gebildet ist. Da die in dem Mantelrohr erwärmte Reaktionsluft sehr hohe Temperaturen von beispielsweise 800°C erreichen kann, ist eine Kühlung des zweiten oberen Rohrbodens, der sowohl dem Rauchgas als auch der erwärmten Reaktionsluft ausgesetzt ist von Vorteil. Durch die Ausgestaltung des zweiten oberen Rohrbodens mit Kühlkammer ist dies auf vorteilhafte Weise möglich. Die Kühlkammer kann mindestens einen, vorzugsweise mehrere Kühlfluideinlässe und mindestens einen Kühlfluidauslass aufweisen. Als Kühlfluid kann Luft verwendet werden, die beispielsweise durch den Kühlfluidauslass der Reaktionsluft zugeführt wird.

Bei einer hängenden Befestigung der zweiten Rohre an dem als Doppelboden ausgebildeten zweiten oberen Rohrboden können die Hängevorrichtungen jeweils als Rohrhülse ausgebildet sein, die an dem Doppelboden befestigt sind. In diese können die zweiten Rohre auf einfache Art und Weise eingehängt werden. Die zweiten Rohre durchdringen die Kühlkammer. Um zu vermeiden, dass die stark erwärmten zweiten Rohre direkt dem Kühlfluid ausgesetzt sind oder ein starker Temperaturgradient entsteht, können die Rohrhülsen die zweiten Rohre im Bereich der Kühlkammer ummanteln und eine Isolationsfunktion ausüben. Über die als Rohrhülsen ausgebildeten Hängevorrichtungen und die Ausgestaltung des zweiten oberen Rohrboden als Doppelboden ist somit eine Aufhängung der zweiten Rohre an dem heißen Ende des Rohrbündelwärmetauschers auf vorteilhafte Weise möglich.

Der zweite untere Rohrboden kann ferner eine Auslasskammer für das Rauchgas begrenzen. In der Auslasskammer wird das Rauchgas, das aus den zweiten Rohren ausströmt, gesammelt und zur weiteren Verarbeitung abgeleitet. Beispielsweise kann hinter dem zweiten Wärmetauscherabschnitt eine Abscheidevorrichtung, beispielsweise eine Filtervorrichtung, vorgesehen sein, die den Industrieruß aus dem Rauchgas abscheidet.

Die Erfindung kann ferner in vorteilhafter Weise vorsehen, dass an dem zweiten unteren Rohrboden angrenzend ein Einlass für die Reaktionsluft angeordnet ist und/oder an dem zweiten oberen Rohrboden angrenzend ein Auslass für die Reaktionsluft angeordnet ist.

Die Rohrleitung, die den Doppelrohrwärmetauscher und den Rohrbündelwärmetauscher miteinander verbindet, kann beispielsweise als Rohrbogen ausgebildet sein.

Die Anordnung des Rohrbündelwärmetauschers in vertikaler Anordnung, wobei das Rauchgas den Rohrbündelwärmetauscher abwärts durchströmt, hat darüber hinaus den Vorteil, dass das Rauchgas nach der Durchströmung des Rohrbündelwärmetauschers am unteren Ende des Rohrbündelwärmetauschers seitlich abgeführt werden kann. Bei herkömmlichen Rohrbündelwärmetauschern zur Luftvorwärmung, bei denen das Rauchgas den Wärmetauscher aufsteigend durchströmt, sind aufwändige Rohrleitungen notwendig, die am oberen Ende des Wärmetauschers nach unten geführt werden müssen.

Im Folgenden wird die Erfindung unter Bezugnahme auf die nachfolgenden Figuren näher erläutert. Es zeigen:
- Fig. 1: eine schematische Prinzipdarstellung einer erfindungsgemäßen Industrierußherstellungsanlage,
- Fig. 2: eine schematische Seitenansicht des Wärmetauschersystems einer erfindungsgemäßen Industrierußherstellungsanlage,
- Fig. 2A: eine schematische Detaildarstellung eines ersten Rohres mit erstem Mantelrohr des ersten Wärmetauscherabschnitts des Wärmetauschersystems der Fig. 1,
- Fig. 3A: eine schematische Detaildarstellung des zweiten oberen Rohrbodens und der zweiten Rohre des zweiten Wärmetauscherabschnitts des Wärmetauschersystems der Fig. 1 und
- Fig. 3B: eine schematische Detaildarstellung des zweiten unteren Rohrbodens und eines zweiten Rohres des zweiten Wärmetauscherabschnitts des Wärmetauschersystems der Fig. 2.

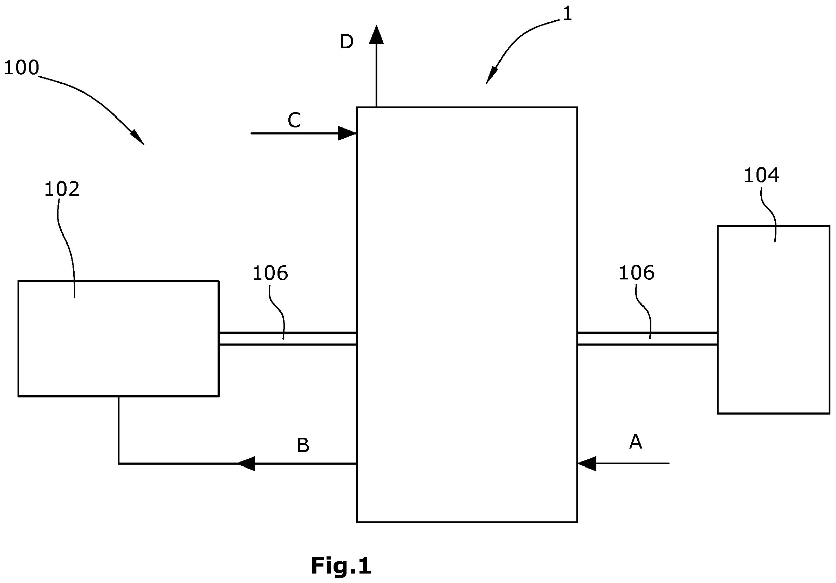

In Fig. 1 ist eine erfindungsgemäße Industrierußherstellungsanlage 100 schematisch in einer Prinzipdarstellung gezeigt. Die Industrierußherstellungsanlage besteht im Wesentlichen aus einem Reaktor 102, einem Wärmetauschersystem 1 und einer Abscheidevorrichtung 104.

In dem Reaktor 102 findet eine unvollständige Verbrennung statt, die ein Rauchgas erzeugt. Das Rauchgas wird über ein Rohrleitungssystem 106 dem Wärmetauschersystem 1 zugeführt. Über ein weiteres Rohrleitungssystem 106 wird das in dem Wärmetauschersystem 1 abgekühlte Rauchgas der Abscheidevorrichtung 104 zugeführt, in der der Industrieruß und das Gas separiert werden.

Dem Wärmetauschersystem 1 wird ferner Reaktionsluft zugeführt. Die Reaktionsluft wird über das Wärmetauschersystem 1 vorgewärmt und anschließend als vorgewärmte Reaktionsluft dem Reaktor zugeführt. Die Flussrichtung der Reaktionsluft ist in Fig. 1 durch entsprechende Pfeile gekennzeichnet, wobei Pfeil A den Zufluss der Reaktionsluft und Pfeil B den Abfluss der Reaktionsluft kennzeichnet. Ferner wird dem Wärmetauschersystem 1 ein zweites Fluid zugeführt. Dieses Fluid wird in dem Wärmetauschersystem 1 ebenfalls erwärmt und als erwärmtes Fluid abgeführt. Das Fluid kann beispielsweise Wasser sein, wobei das erhitzte Wasser im dampfförmigen Zustand von dem Wärmetauschersystem 1 abgeführt wird. Mittels des Wärmetauschersystem 1 wird das Rauchgas abgekühlt und somit die Beendigung der Reaktion unterstützt. Der Zufluss des Fluids ist durch den Pfeil C gezeigt. Der Abfluss des Fluids ist durch den Pfeil D gekennzeichnet.

Die erfindungsgemäße Industrierußherstellungsanlage 100 hat somit den Vorteil, dass einerseits durch die Zuführung von vorgewärmter Reaktionsluft der thermische Wirkungsgrad der Reaktion in dem Reaktor 102 verbessert werden kann. Ferner kann die in dem erzeugten Rauchgas enthaltene thermische Energie zusätzlich für die Erwärmung des Fluids, beispielsweise für die Verdampfung von Wasser, genutzt werden. Der erzeugte Dampf kann beispielsweise einem separaten Überhitzer zugeführt werden und somit in einem herkömmlichen Wasserdampfkreislauf für die Stromerzeugung genutzt werden. Auch kann der erzeugte Dampf anderweitige Verwendung finden.

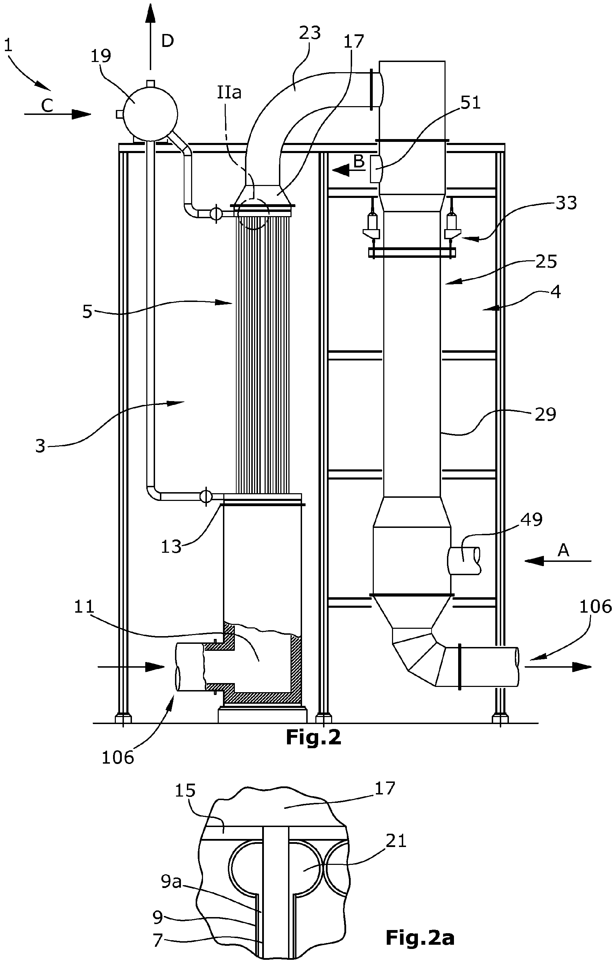

In Fig. 2 ist das Wärmetauschersystem 1 der Industrierußherstellungsanlage 100 der Fig. 1 schematisch im Detail dargestellt.

Das Wärmetauschersystem 1 besteht aus einem ersten Wärmetauscherabschnitt 3 und einem zweiten Wärmetauscherabschnitt 4. In dem ersten Wärmetauscherabschnitt 3 wird das Fluid erhitzt. In dem zweiten Wärmetauscherabschnitt 4 wird die Reaktionsluft vorgewärmt.

Dazu ist der erste Wärmetauscherabschnitt 3 als Doppelrohrwärmetauscher 5 ausgebildet. Der Doppelrohrwärmetauscher 5 weist eine Vielzahl von ersten Rohren 7 auf, die am besten in der in Fig. 2A gezeigten Detaildarstellung ersichtlich sind. Jedes erste Rohr 7 ist jeweils einwegig in einem ersten Mantelrohr 9 angeordnet.

Der Doppelrohrwärmetauscher ist vertikal angeordnet und an seinem unteren Ende wird das Rauchgas zugeführt. Dazu weist der Doppelrohrwärmetauscher 5 eine erste Eintrittskammer 11 auf. Die ersten Rohre 7 sind an der ersten Eintrittskammer 11 angeschlossen. Ein erster unterer Rohrboden 13 begrenzt die Eintrittskammer 11, wobei der erste untere Rohrboden 13 die ersten Rohre 7 aufnimmt.

Am oberen Ende der ersten Rohre 7 ist ein erster oberer Rohrboden 15 angeordnet. Der erste obere Rohrboden 15 nimmt die oberen Enden der ersten Rohre 7 auf. An den ersten oberen Rohrboden 15 anschließend ist ein Sammelrohr 17 für das Rauchgas angeordnet.

Das in die erste Eintrittskammer 11 eintretende Rauchgas wird in die Rohre 7 verteilt und durchströmt diese. Das Fluid wird den Mantelrohren 9 zugeführt und strömt in den zwischen den ersten Rohren 7 und den Mantelrohren 9 gebildeten Spalt 9a.

Der erste Wärmetauscherabschnitt 3 kann ferner eine Dampftrommel 19 aufweisen, die als Speicher, Verteiler und Separator von Wasser und Dampf dient. Die Dampftrommel 19 wird mit Speisewasser versorgt, wie durch den Pfeil C angedeutet ist. Das Wasser wird in mindestens eine an dem ersten unteren Rohrboden 13 angrenzende, nicht dargestellte Einlasskammer geleitet. Diese verteilt das Fluid in die Mantelrohre 9. Im oberen Ende der Mantelrohre 9 ist jeweils eine Auslasskammer 21 für das verdampfte Fluid gebildet, die das verdampfte Fluid sammelt und in die Dampftrommel 19 zurückführt. Das verdampfte Fluid wird, wie durch den Pfeil D angedeutet ist, aus der Dampftrommel 19 abgeführt. Der Doppelrohrwärmetauscher 5 wird im Gleichstrom betrieben. Dadurch kann bei der Verdampfung des Fluids ein Naturumlauf ausgenutzt werden, so dass keine zusätzlichen Einbauten für eine Strömungserzeugung, wie beispielsweise eine Umlaufpumpe, benötigt werden.

Es besteht auch die Möglichkeit, dass die Wandungen der Auslasskammern 21 miteinander verbunden werden und den ersten oberen Rohrboden bilden, so dass auf einen separaten Rohrboden verzichtet werden kann.

Grundsätzlich kann der Aufbau der Auslasskammern 21 und der Einlasskammern spiegelbildlich sein, so dass die Einlasskammern auch den ersten unteren Rohrboden 13 bilden können.

Das in dem Sammelrohr 17 gesammelte Rauchgas wird über eine als Bogen ausgebildete Rohrleitung 23 dem zweiten Wärmetauscherabschnitt 4 zugeführt. Der zweite Wärmetauscherabschnitt 4 ist als Rohrbündelwärmetauscher 25 ausgebildet. Der Rohrbündelwärmetauscher 25 ist ebenfalls vertikal angeordnet und als Gegenstromwärmetauscher ausgebildet. Das Rauchgas, das durch die Rohrleitung 23 zugeführt wird, durchströmt den Rohrbündelwärmetauscher 25 somit abwärts. Die zu erwärmende Reaktionsluft, wird, wie durch die Pfeile A und B gekennzeichnet ist, in einem unteren Abschnitt des Rohrbündelwärmetauschers 25 zugeführt und in einem oberen Abschnitt abgeführt.

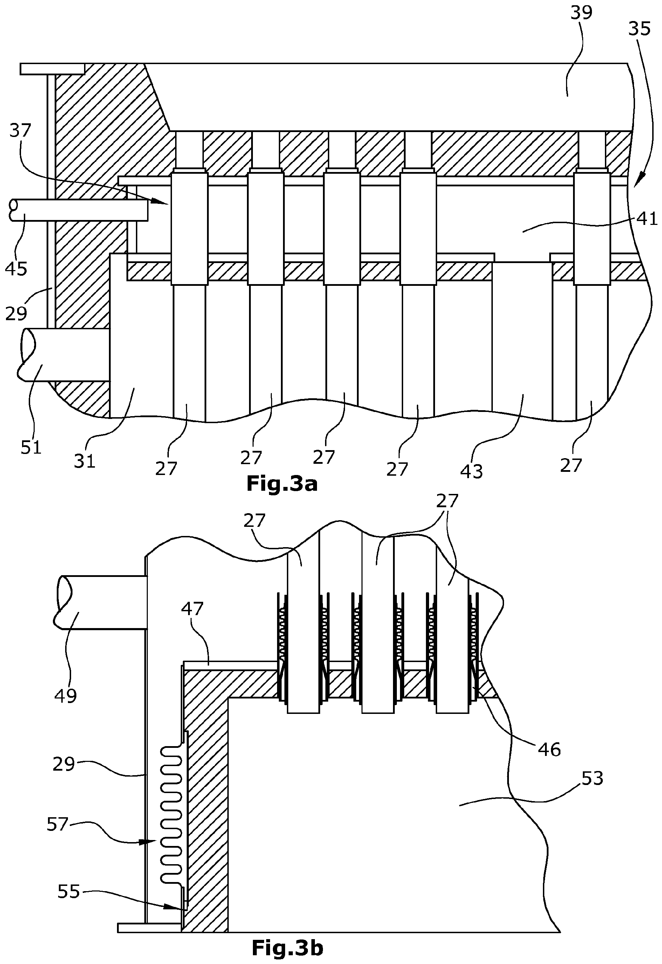

In Fig. 3A ist der obere Abschnitt des Rohrbündelwärmetauschers 25 in einer Detaildarstellung gezeigt. Der Rohrbündelwärmetauscher 25 weist mehrere zweite Rohre 27 auf, die einwegig in einem zweiten Mantelrohr 29 geführt sind. Das zweite Mantelrohr 29 bildet somit eine Kammer 31, die von den zweiten Rohren 27 durchlaufen wird.

Der Rohrbündelwärmetauscher 25 ist hängend angeordnet. Dazu weist der Rohrbündelwärmetauscher 25 eine Halterung 33 auf, die das Mantelrohr 29 greift. Die hängende Anordnung des Rohrbündelwärmetauschers hat den Vorteil, dass eine Wärmedehnung des Rohrbündelwärmetauschers 25 und insbesondere des Mantelrohres 29 in eine nach unten gerichtete Richtung erfolgt. Dadurch werden Probleme, die durch eine unterschiedliche Wärmedehnung des Doppelrohrwärmetauschers und des Rohrbündelwärmetauschers entstehen können, reduziert, so dass auf aufwändige Kompensatoren an der Rohrleitung 23 weitestgehend verzichtet werden kann. Da durch die Rohrleitung 23 Rauchgas mit einer hohen Temperatur strömt, ist eine Ausführung aus hochwertigen Materialien notwendig. Durch den Verzicht auf weitere Einbauten kann somit die Konstruktion und der Kostenaufwand deutlich reduziert werden.

Die mehreren parallelen zweiten Rohre 27 werden von einem zweiten oberen Rohrboden 35 hängend gehalten. Hierzu weist jedes Rohr eine Hängevorrichtung 37 auf. Der zweite obere Rohrboden 35 begrenzt eine am oberen Ende des Rohrbündelwärmetauschers 25 angeordnete zweite Eintrittskammer 39 für das Rauchgas. Aus der zweiten Eintrittskammer 39 wird das Rauchgas in die zweiten Rohre 27 verteilt.

Aufgrund einer relativ hohen Temperatur des Rauchgases in der zweiten Eintrittskammer 39 ist der obere Rohrboden 35 gekühlt. Hierzu ist der zweite obere Rohrboden 35 als Doppelboden ausgebildet mit einer innenliegenden Kühlkammer 41. Die Kühlkammer 41 wird durch mehrere Kühlfluideinlass 45 mit einem Kühlfluid, beispielsweise kühler Luft, gespeist. Durch einen Kühlfluidaustritt 43 kann das Kühlfluid aus der Kühlkammer 41 austreten. Das Kühlfluid kann beispielsweise Luft sein, die über den Kühlfluidaustritt 43 der Reaktionsluft beigemischt wird.

Durch die hängende Anordnung der zweiten Rohre 27 an dem zweiten oberen Rohrboden 35 wird ebenfalls erreicht, dass eine Dehnung der zweiten Rohre 27 in nach unten gerichtete Richtung erfolgen kann.

Um eine Wärmedehnung der zweiten Rohre 27 zu kompensieren, weist jedes zweite Rohr 27 einen Einzelrohrkompensator 46 auf. Dieser ist in Fig. 3B, in der eine Detaildarstellung eines unteren Abschnitts des Rohrbündelwärmetauschers 25 gezeigt ist, erkennbar. Die unteren Ende der zweiten Rohre 27 sind in einem zweiten unteren Rohrboden 47 aufgenommen, wobei die Einzelrohrkompensatoren 46 eine Verbindung zwischen den zweiten Rohren 27 und dem zweiten unteren Rohrboden 47 bilden.

In dem von dem Mantelrohr 29 umschlossenen Raum 31 wird die Reaktionsluft über einen Einlass 49 zugeführt. Nach Durchlaufen des Rohrbündelwärmetauschers 25 wird die Reaktionsluft durch einen Auslass 51 abgeführt. Der zweite untere Rohrboden 47 begrenzt eine weitere Sammelkammer 53 für das Rauchgas. Die die weitere Sammelkammer 53 begrenzende Wand 55 ist mit einem Hauptkompensator 57 versehen, der sicherstellt, dass bei einer starken Dehnung eines der oder mehrerer zweiten Rohre 27 oder eines Versagens eines Einzelrohrkompensators 46 ein Längenausgleich zwischen den Rohren 27 und dem Mantelrohr 29 erfolgen kann. Dabei können ein oder mehrere zweite Rohre 27 den zweiten unteren Rohrboden 47 nach unten drücken, wobei diese Bewegung durch den Hauptkompensator 57 aufgenommen wird.

Durch die vertikale Anordnung des ersten und zweiten Wärmetauscherabschnitts 3,4 und die zusätzliche Verbindung des Doppelrohrwärmetauschers 5 mit dem Rohrbündel am jeweils oberen Ende können der erste und der zweite Wärmetauscherabschnitt 3,4 sehr dicht beieinander angeordnet werden, so dass ein relativ geringer Platzbedarf des Wärmetauschersystems 1 in der Industrierußherstellungsanlage 100 notwendig ist.

## Patentansprüche

1. Industrierußherstellungsanlage (100) mit mindestens einem Reaktor (102) zur Herstellung eines Rauchgases und mit einem Wärmetauschersystem (1) mit einem ersten Wärmetauscherabschnitt (3) zum Wärmeaustausch zwischen dem Rauchgas und einem Fluid und einem zweiten Wärmetauscherabschnitt (4) zum Wärmeaustausch zwischen dem Rauchgas und Reaktionsluft für den Reaktor (102), die mittels des zweiten Wärmetauscherabschnitts (4) vorwärmbar ist,
wobei der erste Wärmetauscherabschnitt (3) als Doppelrohrwärmetauscher (5)mit jeweils einwegig in jeweils einem ersten Mantelrohr (9) angeordneten ersten Rohren (7) und der zweite Wärmetauscherabschnitt (4) als Rohrbündelwärmetauscher (25) mit in einem zweiten Mantelrohr (29) angeordneten Rohrbündel aus zweiten Rohren (27), die jeweils einwegig in dem Mantelrohr (29) angeordnet sind, ausgebildet ist, wobei die ersten und zweiten Rohre (7,27) von dem Rauchgas durchströmbar sind,
wobei der Doppelrohrwärmetauscher (5) und der Rohrbündelwärmetauscher (25) vertikal angeordnet sind und wobei die jeweils oberen Enden der ersten und zweiten Rohre (7,27) über eine Rohrleitung (23) miteinander verbunden sind, wobei das Rauchgas den Doppelrohrwärmetauscher (5) aufsteigend und den Rohrbündelwärmetauscher (25) abwärts durchströmt.

2. Industrierußherstellungsanlage nach Anspruch 1, **dadurch gekennzeichnet, dass** der Doppelrohrwärmetauscher (5) als Naturumlaufdampferzeuger ausgebildet ist.

3. Industrierußherstellungsanlage nach Anspruch 2, **dadurch gekennzeichnet, dass** der Doppelrohrwärmetauscher (5) eine vertikal stehende erste Eintrittskammer (11) für das Rauchgas aufweist, an die die ersten Rohre (7) angeschlossen sind und die ein die ersten Rohre (7) aufnehmender erster unterer Rohrboden (13) begrenzt.

4. Industrierußherstellungsanlage nach Anspruch 3, **dadurch gekennzeichnet, dass** an dem ersten unteren Rohrboden (13) angrenzend mindestens eine Einlasskammer für das Fluid angeordnet ist, an die die ersten Mantelrohre (9) angeschlossen sind.

5. Industrierußherstellungsanlage nach einem der Ansprüche 1 bis 4, **dadurch gekennzeichnet, dass** der Rohrbündelwärmetauscher (25) als Gegenstromwärmetauscher ausgebildet ist.

6. Industrierußherstellungsanlage nach einem der Ansprüche 1 bis 5, **dadurch gekennzeichnet, dass** der Rohrbündelwärmetauscher (25) hängend angeordnet ist.

7. Industrierußherstellungsanlage nach einem der Ansprüche 1 bis 6, **dadurch gekennzeichnet, dass** der Rohrbündelwärmetauscher (25) eine vertikal angeordnete zweite Eintrittskammer (39) für das Rauchgas aufweist, die in einem oberen Endabschnitt des Rohrbündelwärmetauscher (25) angeordnet ist, an die die zweiten Rohre (27) angeschlossen sind und die ein die zweiten Rohre (27) aufnehmender zweiter oberer Rohrboden (35) begrenzt.

8. Industrierußherstellungsanlage nach Anspruch 7, **dadurch gekennzeichnet, dass** die zweiten Rohre (7) am zweiten oberen Rohrboden (35) hängend befestigt sind.

9. Industrierußherstellungsanlage nach Anspruch 8, **dadurch gekennzeichnet, dass** ein zweiter unterer Rohrboden (47) die unteren Enden der zweiten Rohre (27) aufnimmt, wobei die zweiten Rohre (27) jeweils Einzelrohrkompensatoren (46) zur Verbindung mit dem zweiten unteren Rohrboden (47) aufweisen.

10. Industrierußherstellungsanlage nach Anspruch 9, **dadurch gekennzeichnet, dass** an dem zweiten unteren Rohrboden (47) angrenzend ein Einlass (49) für die Reaktionsluft angeordnet ist und/oder an dem zweiten oberen Rohrboden (35) angrenzend ein Auslass (51) für die Reaktionsluft angeordnet ist.

## Claims

1. A carbon black production plant (100) comprising at least one reactor (102) for producing a flue gas and comprising a heat exchange system (1) having a first heat exchange section (3) for heat exchange between the flue gas and a fluid and a second heat exchange section (4) for heat exchange between the flue gas and reaction air for the reactor (102), wherein the reaction air can be preheated by means of the second heat exchange section (4),
wherein said first heat exchange section (3) is designed as a double-tube heat exchanger (5) comprising first tubes (7) each arranged in a single-path configuration in a respective first casing tube (9), and wherein said second heat exchange section (4) is designed as a tube-bundle heat exchanger (25) comprising a tube bundle which is arranged in a second casing tube (29) and which includes second tubes (27) each arranged in a single-path configuration in the casing tube (29), said first and second tubes (7,27) being adapted to have the flue gas flow through them,
wherein said double-tube heat exchanger (5) and said tube-bundle heat exchanger (25) are arranged vertically, and wherein the respective upper ends of the first and second tubes (7,27) are connected to each other via a tube conduit (23), the flue gas flowing through the double-tube heat exchanger (5) in an ascending direction and through the tube-bundle heat exchanger (25) in a descending direction.

2. The carbon black production plant of claim 1, **characterized in that** the double-tube heat exchanger (5) is designed as a natural circulation steam generator.

3. The carbon black production plant of claim 2, **characterized in that** the double-tube heat exchanger (5) comprises a vertically standing first entry chamber (11) for the flue gas that has connected to it the first tubes (7) and is delimited by a first lower tube plate (13) accommodating the first tubes (7).

4. The carbon black production plant of claim 3, **characterized in that**, adjacent to the first lower tube plate (13), at least one inlet chamber for the fluid is arranged that has the first casing tubes (9) connected to it.

5. The carbon black production plant of any one of claims 1 to 4, **characterized in that** the tube-bundle heat exchanger (25) is designed as a counterflow heat exchanger.

6. The carbon black production plant of any one of claims 1 to 5, **characterized in that** the tube-bundle heat exchanger (25) is arranged in a suspended manner.

7. The carbon black production plant of any one of claims 1 to 6, **characterized in that** the tube-bundle heat exchanger (25) comprises a vertically arranged second entry chamber (39) for the flue gas, said chamber being arranged in an upper end section of the tube-bundle heat exchanger (25), having the second tubes (27) connected thereto and being delimited by a second upper tube plate (35) accommodating the second tubes (27).

8. The carbon black production plant of claim 7, **characterized in that** the second tubes (7) are fastened by being suspended on the second upper tube plate (35).

9. The carbon black production plant of claim 8, **characterized in that** a second lower tube plate (47) accommodates the lower ends of the second tubes (27), wherein the second tubes (27) each comprise individual tube compensators (46) for connection with the second lower tube plate (47).

10. The carbon black production plant of claim 9, **characterized in that** an inlet (49) for the reaction air is arranged adjacent to the second lower tube plate (47), and/or an outlet (51) for the reaction air is arranged adjacent to the second upper tube plate (35).

## Revendications

1. Installation de fabrication de noir de carbone (100) dotée d'au moins un réacteur (102) destiné à produire un gaz de combustion et d'un système d'échangeur de chaleur (1) comprenant une première section d'échangeur de chaleur (3) destinée à l'échange de chaleur entre le gaz de combustion et un fluide et une deuxième section d'échangeur de chaleur (4) destinée à l'échange de chaleur entre le gaz de combustion et l'air de réaction pour le réacteur (102), l'air pouvant être préchauffé au moyen de la deuxième section d'échangeur de chaleur (4),
dans laquelle la première section d'échangeur de chaleur (3) est conçue comme échangeur de chaleur à double tube (5) comprenant respectivement dans un sens de premiers tubes (7) agencés respectivement dans un premier manchon (9) et la deuxième section d'échangeur de chaleur (4) est conçue comme échangeur de chaleur à faisceau de tubes (25) comprenant un faisceau de tubes agencé dans un deuxième manchon (29), à partir de deuxièmes tubes (27) respectivement agencés dans un sens dans le manchon (29), les premiers et deuxièmes tubes (7, 27) pouvant être traversés par le gaz de combustion,
dans laquelle l'échangeur de chaleur à double tube (5) et l'échangeur de chaleur à faisceau de tubes (25) sont agencés de manière verticale et dans laquelle les extrémités supérieures respectives des premiers et deuxièmes tubes (7, 27) sont raccordées l'une à l'autre par une conduite (23), dans laquelle le gaz de combustion traverse l'échangeur de chaleur à double tube (5) dans le sens ascendant et traverse l'échangeur de chaleur à faisceau de tubes (25) en aval.

2. Installation de fabrication de noir de carbone selon la revendication 1, **caractérisée en ce que** l'échangeur de chaleur à double tube (5) est conçu comme générateur de vapeur à circulation naturelle.

3. Installation de fabrication de noir de carbone selon la revendication 2, **caractérisée en ce que** l'échangeur de chaleur à double tube (5) comporte une première chambre d'entrée (11) verticale pour le gaz de combustion, à laquelle les premiers tubes (7) sont raccordés et qui délimite un premier fond de tube (13) inférieur accueillant les premiers tubes (7).

4. Installation de fabrication de noir de carbone selon la revendication 3, **caractérisée en ce qu'**au moins une chambre d'admission pour le fluide est agencée comme adjacente au premier fond de tube (13) inférieur, à laquelle est raccordé le premier manchon (9).

5. Installation de fabrication de noir de carbone selon l'une des revendications 1 à 4, **caractérisée en ce que** l'échangeur de chaleur à faisceau de tubes (25) est conçu comme échangeur de chaleur à contre-courant.

6. Installation de fabrication de noir de carbone selon l'une des revendications 1 à 5, **caractérisée en ce que** l'échangeur de chaleur à faisceau de tubes (25) est agencé en suspension.

7. Installation de fabrication de noir de carbone selon l'une des revendications 1 à 6, **caractérisée en ce que** l'échangeur de chaleur à faisceau de tubes (25) comporte une deuxième chambre d'entrée (39) verticale pour le gaz de combustion, laquelle est agencée dans une extrémité supérieure de l'échangeur de chaleur à faisceau de tubes (25), à laquelle les deuxièmes tubes (27) sont raccordés et qui délimite un deuxième fond de tube (35) supérieur accueillant les deuxièmes tubes (27).

8. Installation de fabrication de noir de carbone selon la revendication 7, **caractérisée en ce que** les deuxièmes tubes (7) sont fixés en suspension sur le deuxième fond de tube (35) supérieur.

9. Installation de fabrication de noir de carbone selon la revendication 8, **caractérisée en ce qu'**un deuxième fond de tube (47) inférieur accueille les extrémités inférieures des deuxièmes tubes (27), dans laquelle les deuxièmes tubes (27) comportent respectivement des compensateurs de tube individuel (46) pour raccordement au deuxième fond de tube (47) inférieur.

10. Installation de fabrication de noir de carbone selon la revendication 9, **caractérisée en ce qu'**une admission (49) pour l'air de réaction est agencée comme adjacente au deuxième fond de tube (47) inférieur et/ou **en ce qu'**une évacuation (51) pour l'air de réaction est agencée comme adjacente au deuxième fond de tube (35) supérieur.
